# EUROPEAN PATENT SPECIFICATION

(11) **EP 0 890 595 B1**
(45) Date of publication and mention of the grant of the patent: **02.02.2000**
(21) Application number: 97111749.4
(22) Date of filing: 10.07.1997
(51) Int. Cl.: C08G 63/54, C08G 63/676, C08L 67/06, C09K 19/38

(54) **High temperature self-crosslinking polyesters**
Bei hoher Temperatur selbstvernetzende Polyester
Polyesters auto-réticulants à haute température

(43) Date of publication of application: 13.01.1999
(73) Proprietor: DAINIPPON INK AND CHEMICALS, INC., Itabashi-ku Tokyo (JP)
(72) Inventor: Pithart, Cornelia, Dr., 14163 Berlin (DE); Frings, Rainer Bruno, Dr., 12307 Berlin (DE); Haraguchi, Kazutoshi, Dr., Chiba-shi, Chiba-ken (JP); Grahe, Gerwald, Dr., 14195 Berlin (DE)
(74) Representative: Kraus, Walter, Dr.

(56) References cited:
- EP-A- 0 383 177
- DE-C- 4 411 361
- H.R. KRICHELDORF ET AL.: JOURNAL OF MACROMOLECULAR SCIENCE-PURE AND APPLIED CHEMISTRY, vol. A34, no. 6, 1997, pages 955-964, XP002050976
- P.Y. CHEN ET AL.: JOURNAL OF POLYMER SCIENCE: POLYMER CHEMISTRY EDITION, vol. 19, 1981, pages 619-627, XP002050977
- FOMINA, L. ET AL: "SYNTHESIS AND CHARACTERIZATION OF SOME NOVEL POLYAMIDES CONTAINING DIACETYLENE SIDE GROUPS" MACROMOLECULAR CHEMISTRY AND PHYSICS, vol. 197, no. 9, September 1996, pages 2653-2663, XP000636309
- W.T. MÜLLER ET AL.: MACROMOLECULES, vol. 23, no. 11, 28 May 1990, pages 2825-2829, XP002050978
- S.K. DIRLIKOV: HIGH PERFORMANCE POLYMERS, vol. 2, no. 1, 1990, pages 67-77, XP002050979

## Description

The present invention relates to novel, fusible, liquid crystalline polyesters having lateral propargyloxy groups which undergo self-crosslinking in the liquid crystalline phase at above their melting point.

Polyesters and methods for the production thereof have long been known and are used in many applications. Recently, there have been increasing numbers of reports about stiff-chained polyesters and also about liquid crystalline polyesters, which improve the mechanical properties of matrix polymers. Disadvantages of these polyesters are the frequently low solubility and elevated melting points thereof.

DE 44 11 361 C1 proposes overcoming these disadvantages by incorporating n-pentyloxy or 3-methylbutyloxy side groups and by incorporating non-linear diols. A disadvantage of these polyesters is that they cannot be immobilised within the matrix polymers.

The object underlying the invention is accordingly to provide novel liquid crystalline polyesters which improve the mechanical properties of matrix polymers which polyesters may, however, also be firmly anchored within this system.

It has surprisingly been found that polyesters having side groups which crosslink at above the melting point of the polyester reinforce the matrix polymers, the strength of the reinforcement varying with crosslink density.

The present invention provides self-crosslinking polyesters comprising the repeat units A of the formula (I) 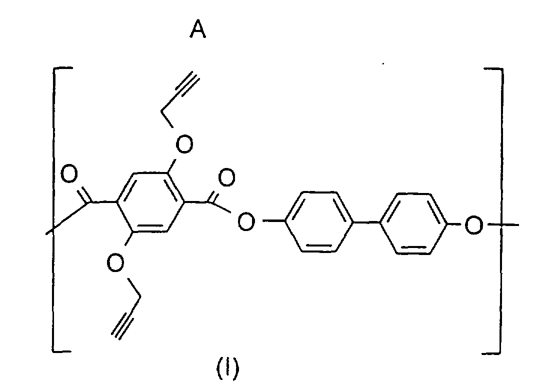 or repeat units A of the formula (I) and B of the formula (II) arranged in any desired sequence 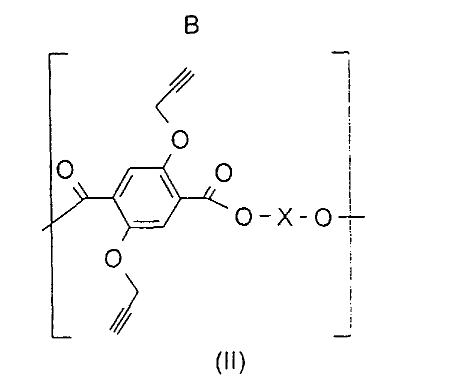 or repeat units A of the formula (I) optionally together with B of the formula (II) and C of the formula (III) arranged in any desired sequence 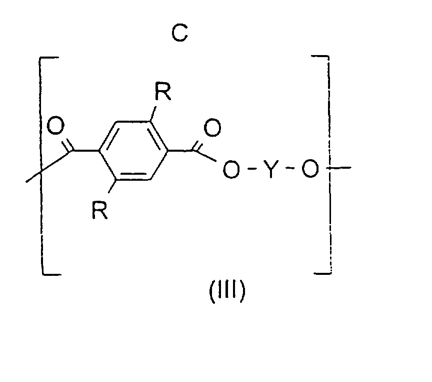 wherein R denotes H or a linear or branched alkyloxy group having 1 to 18 C atoms and X and Y each denote a different divalent alicyclic or aromatic hydrocarbon residue, which may optionally contain a heteroatom, and the molar ratio of A : (B + C) = 99:1 to 1:99, the average total number of repeat units A + B + C in the polymer molecule is in the range from 10 to 200, one of the two terminal repeat units bears a hydrogen atom on the oxy group and the other of the two terminal repeat units bears a hydroxyl group on the carbonyl group.

As already mentioned, residues X and Y each denote different divalent alicyclic or aromatic hydrocarbon residues, which may optionally contain a heteroatom, such as oxygen, sulphur, nitrogen, phosphorus, silicon or halogens, in particular fluorine, chlorine, bromine, or iodine.

X and Y thus denote, for example, 1,1'-biphenyldiyl, 2,5-biphenyldiyl, 1,5-naphthalene-diyl, 2,3-naphthalenediyl, 2,5-naphthalenediyl, 2,6-naphthalenediyl, 2,7-naphthalenediyl, 1,4-disubstituted cyclohexyldiyl groups, 2,2'-bis(4-phenyldiyl)propane, bis(4-phenyldiyl)methane, bis(4-phenyldiyl) oxide, bis(4-phenyldiyl) sulphide, bis(4-phenyldiyl) sulphone, 4,4'-stilbenediyl, azobenzenediyl, terphenyldiyl and quaterphenyldiyl.

The average total number of repeat units A, optionally B or C, per polymer chain may be 10 to 200, advantageously 50 to 150, wherein one of the two terminal repeat units bears a hydrogen atom on the oxy group and the other of the two terminal repeat units bears a hydroxyl group on the carbonyl group. Should the polyesters according to the invention also contain repeat unit B and/or C in addition to repeat unit A, these are randomly distributed, wherein the proportion of repeat units A may amount to 1 to 99 mol.% and that of repeat units B alone or C alone may amount to 99 to 1 mol.%.

The polyesters according to the invention crosslink once fused into their liquid crystalline phase at above 220°C without addition of a catalyst and form a network insoluble in solvents, wherein the liquid crystalline phase is frozen in.

The formula (IV) below shows by way of example the structure of a polyester according to the invention synthesised from bis(propargyloxy)terephthalic acid, 4,4'-dihydroxybiphenyl, 2,5-bis(alkyloxy)terephthalic acid and a second diol component, wherein the average degree of polymerisation, *i*.*e*. the sum of m + n, is an integer from 10 to 200, advantageously from 50 to 150, and repeat units A and C may be randomly distributed 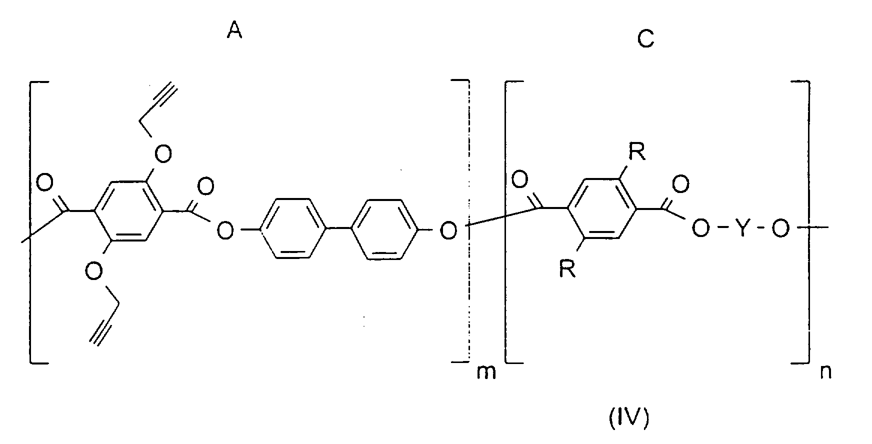 wherein R denotes H or a linear or branched alkyloxy group having 1 to 18 C atoms and Y is defined as above.

The polyesters according to the invention have a weight average molecular weight M_{w} of 5000 to 100000, preferably of 25000 to 70000.

This invention furthermore relates to a process for the production of the fusible liquid crystalline polyesters from terephthalic units having lateral propargyloxy groups. In this process, the dicarboxylic acid chlorides of the general formula (V) and optionally (VI) 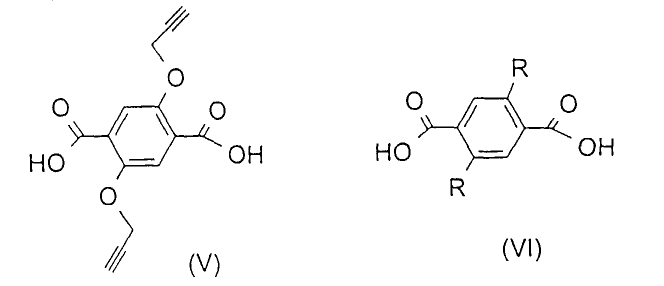 in which R denotes H or a linear or branched-chain alkoxy group having 1 to 18 C atoms are subjected to polycondensation with the equimolar quantity of an appropriate diol or diol mixture. Suitable diols used in the process according to the invention are those capable of forming a liquid crystalline structure together with the terephthalic units. Such diols are in particular derived from dihydroxy-substituted alicyclic or aromatic hydrocarbon residues. Examples of such alicyclic or aromatic hydrocarbon residues which, as already explained above, may also be substituted by heteroatoms, are 1,1'-biphenyldiyl, 2,5-biphenyldiyl, 1,5-naphthalenediyl, 2,3-naphthalenediyl, 2,5-naphthalenediyl, 2,6-naphthalenediyl, 2,7-naphthalenediyl, 1,4-cyclohexanediyl, 2,2'-bis(4-phenyldiyl)propane, bis(4-phenyldiyl)methane, bis(4-phenyldiyl) oxide, bis(4-phenyldiyl) sulphide, bis(4-phenyldiyl) sulphone, 4,4'-stilbenediyl, azobenzenediyl, terphenyldiyl or quaterphenyldiyl.

The dicarboxylic acids used for the production of the dicarboxylic acid chlorides of the general formulae (V) and (VI) may be synthesised, for example, using the Claisen method (L. Claisen, O. Eisleb, *Justus Liebigs Ann. Chem.,* 401, 29 (1913)) with subsequent ester cleavage or by modifying the Ballauff method (M. Ballauff, *Makromol. Chem*., *Rapid Commun*., 7, 407 (1986)). The starting substance is 2,5-dihydroxy-terephthalic acid diethyl or dimethyl ester, which is reacted with propargyl bromide or the corresponding bromoalkanes, potassium carbonate and potassium iodide. The intermediate product is combined with potassium hydroxide solution in order to saponify the ester groups.

The polyesters according to the invention may in principle be produced from these 2,5-disubstituted terephthalic acids and the above-stated diols using known methods in which the reaction temperature does not exceed 150°C as the propargyloxy group could then polymerise.

Preferably, however, the polyesters according to the invention are produced by modifying the Dicke & Lenz method (H.R. Dicke, R.W. Lenz, *Angew*. *Chem*., 131, 95 (1985)). The substituted terephthalic acid is reacted with thionyl chloride to yield the acid chloride. This is dissolved in an inert solvent, the diol or diol mixture is added thereto in the solid state and pyridine is then added in a quantity just sufficient to dissolve the mixture.

Polycondensation proceeds over a period of at least 20 hours and at temperatures of 60 to 150°C, preferably of 80 to 120°C.

The inert solvent used is preferably a chlorinated hydrocarbon or a cyclic or non-cyclic ether of a suitable boiling point. Examples of such solvents are 1,1,2-trichloroethane, 1,1,1,2-tetrachloroethane, 1,1,2,2-tetrachloroethane, tetrachloroethylene, dichloromethane, chloroform, tetrahydrofuran and 1,2-dimethoxyethane.

The polyesters according to the invention have a melting point of between 80 and 220°C, preferably of between 100 and 200°C and exhibit a liquid crystalline phase. The polyesters according to the invention crosslink at above 220°C, so freezing in the liquid crystalline phase. It is, however, particularly advantageous that this crosslinking proceeds without the addition of a catalyst.

Microscopic examination of the liquid crystalline polyesters according to the invention in polarised light reveals nematic phases. These are frozen in during crosslinking, such that the preferential orientation of the nematic phases is retained during and after crosslinking. This is advantageous in comparison with crosslinkable polyesters which do not exhibit any liquid crystalline properties as retention of the preferential orientation after crosslinking increases the reinforcing action of the non-liquid crystalline polyesters. Orientation of the nematic phase may be further increased if, prior to crosslinking, the liquid crystalline phase of the polyesters according to the invention is aligned in one direction by magnetic, electric fields, by surface treatment or by mechanical action, such as extrusion or stretching. This orientation is retained after crosslinking and brings about the additional reinforcement.

The polyesters according to the invention may also be used in mixtures of two polyesters, one of which has a liquid crystalline phase, while the other immediately passes into the isotropic phase at temperatures above the melting point. At a percentage content of up to above 95% of the non-liquid crystalline polyester, the mixture then has liquid crystalline domains in the melt, which are frozen in during crosslinking, such that in this case too the preferential orientation of this nematic phase is retained and reinforcement is achieved. This reinforcement may again be increased by aligning the liquid crystalline phase in one direction prior to crosslinking by magnetic, electric fields, by surface treatment or by mechanical action, such as extrusion or stretching.

A particularly advantageous feature of the polyesters according to the invention is that the crosslinkable propargyloxy group is not reactive below a temperature of 150 to 180°C such that, below this temperature range, the monomers may very simply be produced without the propargyloxy group reacting.

The solubility of the polyesters according to the invention in organic solvents, such as for example chloroform, pyridine, DMF and dichloromethane, is also advantageous.

The network density of the crosslinked polyester may be adjusted by means of the content of terephthalate containing no propargyloxy groups and may thus be adapted to the particular requirements of potential applications.

The polyesters according to the invention have one decisive advantage over polyethylene terephthalate. This latter polymer softens very rapidly at elevated temperatures and is readily swellable in solvents. The crosslinking of the polyesters according to the invention overcomes this substantial disadvantage.

Another advantage of the polyesters according to the invention is that the liquid crystalline thermosets exhibit less shrinkage on crosslinking that non-liquid crystalline thermosets.

The polyesters according to the invention may, for example, be added to systems as additives. They are moreover suitable for the production of thermoset films and mouldings, which are to be two- and three-dimensionally stabilised. Applications are, for example, polymers for injection moulding or the transfer moulding process.

The following Examples illustrate the invention in greater detail.

### Examples

### Production of the starting compounds (Examples 1 to 4)

### Example 1

A mixture of 20.0 g of 2,5-dihydroxyterephthalic acid dimethyl ester, 36.4 g of potassium carbonate and 26.0 g of propargyl bromide is boiled in acetone for at least 20 hours. The mixture is filtered while hot. The solvent is then removed from the filtrate and the residue is mixed with 200 ml of 5 wt.% potassium hydroxide solution and 15 ml of ethanol and boiled for one hour. The ethanol is removed and the product precipitated by acidification with hydrochloric acid.

Melting point (Fp): 237°C; yield: 20.7 g (86% of theoretical). Positive identification of the structure of the dicarboxylic acid could be obtained by spectroscopic analysis.

### Example 2

20.6 g of the 2,5-bis(propargyloxy)terephthalic acid from Example 1 are dissolved in a 2 to 10 times excess of thionyl chloride and refluxed for at least 16 hours. The excess thionyl chloride is removed by vacuum distillation, initially at room temperature and then at 40 to 50°C. The acid chloride is then recrystallised from dichloromethane.

Melting point (Fp): 146°C; yield: 21.9 g (94%) of theoretical. Positive identification of the structure of the dicarboxylic acid dichloride could be obtained by spectroscopic analysis.

### Example 3

A mixture of 25.4 g of 2,5-dihydroxyterephthalic acid diethyl ester, 30.0 g of potassium carbonate, 1 g of potassium iodide and 31.5 g of 1-bromopentane is boiled in cyclopentanone for at least 24 hours. The mixture is filtered while hot. The solvent is then removed from the filtrate and the residue is mixed with 250 ml of 5 wt.% potassium hydroxide solution and 20 ml of ethanol and boiled for at least 24 hours. The ethanol is removed and the product precipitated by acidification with hydrochloric acid.

Melting point (Fp): 156°C (literature: 152°C); yield: 23.7 g (70% of theoretical). Positive identification of the structure of the dicarboxylic acid could be obtained by spectroscopic analysis.

### Example 4

18.4 g of the 2,5-bis(pentyloxy)terephthalic acid from Example 3 are dissolved in a 2 to 10 times excess of thionyl chloride and refluxed for at least 16 hours. The excess thionyl chloride is removed by vacuum distillation, initially at room temperature and then at 40 to 50°C. The acid chloride is then recrystallised from n-hexane, wherein the purified product crystallises at temperatures of below -5°C.

Melting point (Fp): 27°C; yield: 18.2 g (90% of theoretical). Positive identification of the structure of the dicarboxylic acid dichloride could be obtained by spectroscopic analysis.

### Production of the polyesters and the networks (Examples 5 to 9)

### Example 5

3.76 g (12.1 mmol) of the acid chloride from Example 2 and 18.13 g (48.3 mmol) of the acid chloride from Example 4 are dissolved in 200 ml of 1,1,2-trichloroethane. 7.87 g (42.3 mmol) of 4,4'-dihydroxybiphenyl and 2.9 g (18.1 mmol) of 1,5-dihydroxynaphthalene are then added in a single portion as the diol component together with 20 ml of pyridine. After 24 hours' heating to 100°C, the polymer is precipitated by being poured into methanol and then reprecipitated once more. After repeated washing with methanol and water, the product is dried under a vacuum at 60°C. A copolyester was obtained which could be positively identified by spectroscopic analysis.

Appearance: beige-coloured powder; yield: 24.5 g (87% of theoretical); melting: from 140°C with formation of a nematic phase; from 226°C an insoluble network is formed, freezing in the nematic phase.

### Example 6

The same method is used as in Example 5, but using 10.01 g (16.1 mmol) of the acid chloride from Example 2, 24.18 g (64.4 mmol) of the acid chloride from Example 4, 15.0 g (80.6 mmol) of 4,4'-dihydroxybiphenyl, 250 ml of 1,1,2-trichloroethane and 30 ml of pyridine.

Appearance: beige-coloured powder; yield: 36.5 g (95% of theoretical); GPC molecular weight (M_{w}): 37530 g/mol; melting: from 200°C with formation of a nematic phase; from 230°C an insoluble network is formed, freezing in the nematic phase.

### Example 7

The same method is used as in Example 5, but using 8.29 g (26.7 mmol) of the acid chloride from Example 2, 15.00 g (40 mmol) of the acid chloride from Example 4, 12.4 g (66.6 mmol) of 4,4'-dihydroxybiphenyl, 200 ml of 1,1,2-trichloroethane and 20 ml of pyridine.

Appearance: grey powder; yield: 27 g (87% of theoretical); melting: from 190°C with formation of a nematic phase; from 230°C an insoluble network is formed, freezing in the nematic phase.

### Example 8

The same method is used as in Example 5, but using 15.03 g (48.3 mmol) of the acid chloride from Example 2, 4.54 g (12.08 mmol) of the acid chloride from Example 4, 5.62 g (30.19 mmol) of 4,4'-dihydroxybiphenyl, 4.84 g (30.19 mmol) of 1,5-dihydroxynaphthalene, 200 ml of 1,1,2-trichloroethane and 20 ml of pyridine.

Appearance: white powder; yield: 22 g (86% of theoretical); melting: from 150°C with formation of a nematic phase; from 230°C an insoluble network is formed, freezing in the nematic phase.

### Example 9

The same method is used as in Example 5, but using 3.76 g (12.08 mmol) of the acid chloride from Example 2, 18.13 g (48.3 mmol) of the acid chloride from Example 4, 7.87 g (42.3 mmol) of 4,4'-dihydroxybiphenyl, 2.9 g (18.12 mmol) of 2,6-dihydroxynaphthalene, 200 ml of 1,1,2-trichloroethane and 20 ml of pyridine.

Appearance: beige-coloured powder; yield: 19.5 g (69% of theoretical); melting: from 118°C with formation of a nematic phase; from 225°C an insoluble network is formed, freezing in the nematic phase.

### Applications

### Practical Example 1

5 g of the polyester from Example 6 are dissolved in chloroform and the solvent then evaporated. The polyester is crosslinked for 10 minutes at 290°C. DSC analyses reveal that crosslinking is complete.

### Practical Example 2

8 g of the polyester from Example 8 are heated for 30 minutes at 250°C. DSC analyses reveal that crosslinking is complete.

### Practical Example 3

6 g of the polyester from Example 5 are heated for 45 minutes at 260°C. DSC analyses reveal that crosslinking is complete.

## Claims

1. Self-crosslinking polyester comprising the repeat units A of the formula (I) 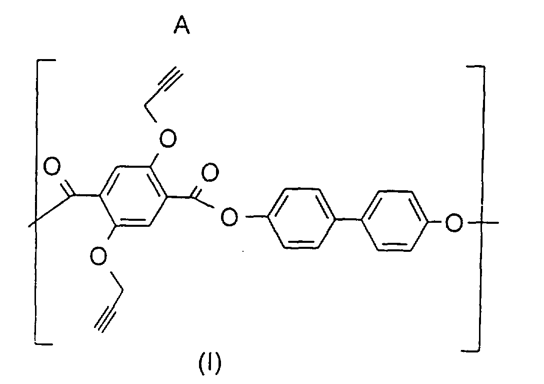 or repeat units A of the formula (I) and B of the formula (II) arranged in any desired sequence 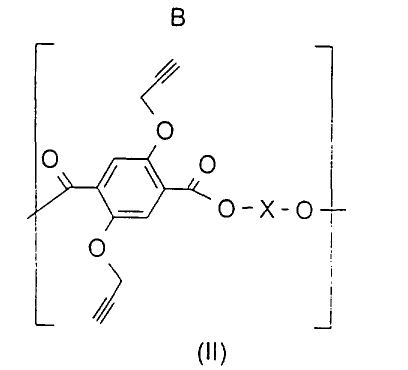 or repeat units A of the formula (I) optionally together with B of the formula (II) and C of the formula (III) arranged in any desired sequence 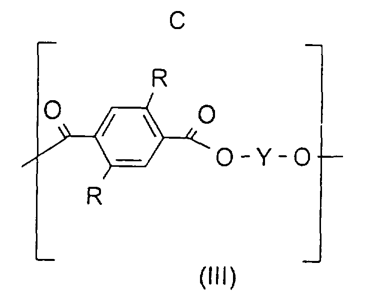 wherein R denotes H or a linear or branched alkyloxy group having 1 to 18 C atoms and X and Y each denote a different divalent alicyclic or aromatic hydrocarbon residue, which may optionally contain a heteroatom, and the molar ratio of A : (B + C) = 99:1 to 1:99, the average total number of repeat units A + B + C in the polymer molecule is in the range from 10 to 200, one of the two terminal repeat units bears a hydrogen atom on the oxy group and the other of the two terminal repeat units bears a hydroxyl group on the carbonyl group.

2. Self-crosslinking polyester according to claim 1, characterised in that X or Y denote optionally substituted 1,1'-biphenyldiyl, 2,5-biphenyldiyl, 1,5-naphthalenediyl, 2,3-naphthalenediyl, 2,5-naphthalenediyl, 2,6-naphthalenediyl, 2,7-naphthalenediyl, 1,4-cyclohexanediyl, 2,2'-bis(4-phenyldiyl)propane, bis(4-phenyldiyl)methane, bis(4-phenyldiyl) oxide, bis(4-phenyldiyl) sulphide, bis(4-phenyldiyl) sulphone, 4,4'-stilbenediyl, azobenzenediyl, terphenyldiyl and quaterphenyldiyl.

3. Self-crosslinking polyester according to one of claims 1 or 2, characterised in that it has a weight average molecular weight of 5000 to 100000 g/mol.

4. Self-crosslinking polyester according to one of claims 1 to 3, characterised in that the liquid crystalline phase thereof has been aligned in one direction prior to crosslinking by magnetic, electric fields, by surface treatment and by mechanical action.

5. Process for the production of the polyesters according to claims 1 to 4, characterised in that 2,5-bis(propargyloxy)terephthalic acid dichloride of the formula (V) 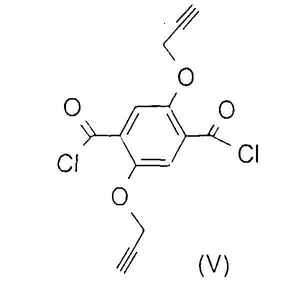 and optionally 2,5-dialkyloxyterephthalic acid dichloride of the formula (VI) 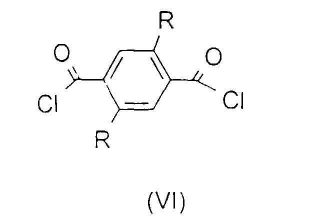 in which R is defined as in claim 1, or terephthalic acid dichloride of the formula 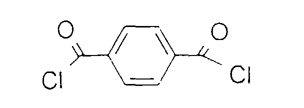 is subjected to polycondensation with one or more diols of the formula
HO-X-OH and HO-Y-OH
in which X and Y are defined as in claim 1 with heating in a mixture of pyridine and a chlorinated hydrocarbon and the resultant polyester is then isolated and purified using conventional methods.

6. Process according to claim 5, characterised in that polycondensation is performed at temperatures of 60 to 150°C and over a period of at least 20 hours.

7. Mixture containing the self-crosslinking polyester according to claims 1 to 3 and another non-liquid crystalline polyester.

8. Mixture according to claim 7, characterised in that the liquid crystalline phase thereof has been aligned in one direction prior to crosslinking by magnetic, electric fields, by surface treatment and by mechanical action.

9. Use of the self-crosslinking polyester according to claims 1 to 4 and of the mixture according to claims 7 and 8 for materials having reinforcing properties, in particular as a compatibiliser, and for polymer blends and for the production of thermosetting films and mouldings.

## Patentansprüche

1. Selbstvernetzender Polyester, umfassend Repetiereinheiten A der Formel (I) 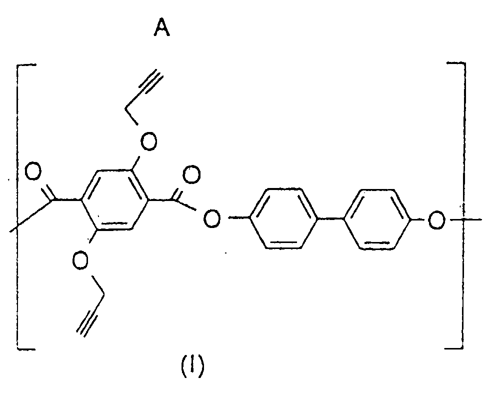 oder Repetiereinheiten A der Formel (I) und B der Formel (II), die in jeder beliebigen gewünschten Sequenz angeordnet sind 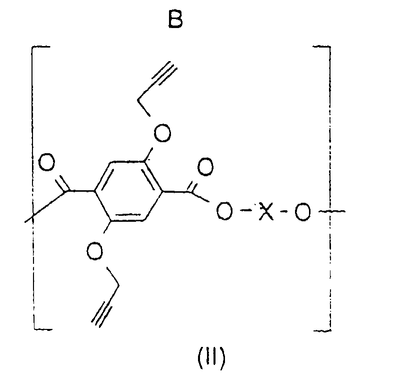 oder Repetiereinheiten A der Formel (I), gegebenenfalls zusammen mit B der Formel (II) und C der Formel (III), die in jeder beliebigen gewünschten Reihenfolge angeordnet sind 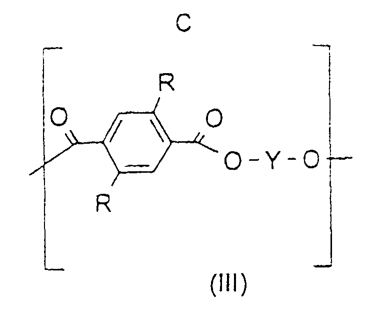 worin R für H oder eine lineare oder verzweigte Alkyloxygruppe mit 1 bis 18 Kohlenstoffatomen steht und X und Y jeweils einen unterschiedlichen zweiwertigen alicyclischen oder aromatischen Kohlenwasserstoffrest bedeuten, der gegebenenfalls ein Heteroatom enthalten kann und wobei das Molverhältnis A : (B + C) = 99:1 bis 1:99, die mittlere Gesamtzahl der Repetiereinheiten A + B + C in dem Polymermolekül im Bereich von 10 bis 200 liegt, eine der zwei endständigen Repetiereinheiten ein Wasserstoffatom auf der Oxygruppe trägt und das andere der zwei endständigen Repetiereinheiten eine Hydroxylgruppe auf der Carbonylgruppe trägt.

2. Selbstvernetzender Polyester nach Anspruch 1, dadurch **gekennzeichnet**, daß X oder Y für gegebenenfalls substituiertes 1,1'-Biphenyldiyl, 2,5-Biphenyldiyl, 1,5-Naphthalindiyl, 2,3-Naphthalindiyl, 2,5-Naphthalindiyl, 2,6-Naphthalindiyl, 2,7-Naphthalindiyl, 1,4-Cyclohexandiyl, 2,2'-Bis(4-phenyldiyl)propan, Bis(4-phenyldiyl)methan, Bis(4-phenyldiyl)oxid, Bis(4-phenyldiyl)sulfid, Bis(4-phenyldiyl)sulfon, 4,4'-Stilbendiyl, Azobenzoldiyl, Terphenyldiyl und Quaterphenyldiyl stehen.

3. Selbstvernetzender Polyester nach einem der Ansprüche 1 oder 2, dadurch **gekennzeichnet**, daß er ein gewichtsmittleres Molekulargewicht von 5000 bis 100.000 g/mol hat.

4. Selbstvernetzender Polyester nach einem der Ansprüche 1 bis 3, dadurch **gekennzeichnet**, daß seine flüssige kristalline Phase in einer Richtung vor der Vernetzung durch magnetische, elektrische Felder, durch Oberflächenbehandlung und durch mechanische Einwirkung ausgerichtet worden ist.

5. Verfahren zur Herstellung der Polyester nach den Ansprüchen 1 bis 4, dadurch **gekennzeichnet,** daß 2,5-Bis(propargyloxy)terephthalsäuredichlorid der Formel (V) 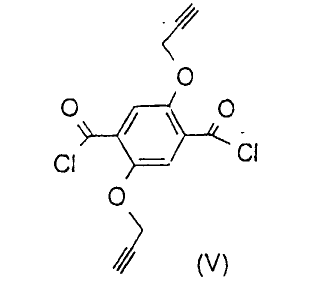 und gegebenenfalls 2,5-Dialkyloxyterephthalsäuredichlorid der Formel (VI) 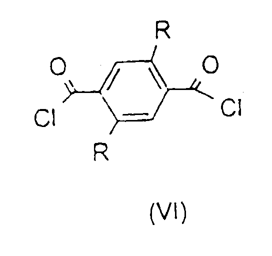 worin R wie in Anspruch 1 definiert ist, oder Terephthalsäuredichlorid der Formel 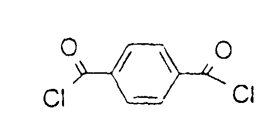 mit einem oder mehreren Diolen der Formel
HO-X-OH und HO-Y-OH
worin X und Y wie in Anspruch 1 definiert sind, unter Erhitzen in einem Gemisch aus Pyridin und einem chlorierten Kohlenwasserstoff einer Polykondensation unterworfen werden und der resultierende Polyester dann nach herkömmlichen Methoden isoliert und gereinigt wird.

6. Verfahren nach Anspruch 5, dadurch **gekennzeichnet** , daß die Polykondensation bei einer Temperatur von 60 bis 150°C und über einen Zeitraum von mindestens 20 Stunden durchgeführt wird.

7. Gemisch, enthaltend den selbstvernetzenden Polyester nach den Ansprüchen 1 bis 3 und einen anderen nichtflüssigen kristallinen Polyester.

8. Gemisch nach Anspruch 7, dadurch **gekennzeichnet** , daß seine flüssige kristalline Phase in einer Richtung vor der Vernetzung durch magnetische, elektrische Felder, durch Oberflächenbehandlung und durch mechanische Einwirkung ausgerichtet worden ist.

9. Verwendung des selbstvernetzenden Polyesters nach den Ansprüchen 1 bis 4 und des Gemisches nach den Ansprü chen 7 und 8 für Materialien mit verstärkenden Eigenschaften, insbesondere als Kompatibilisierungsmittel, und für Polymergemische und zur Herstellung von wärmehärtenden Filmen und Formkörpern.

## Revendications

1. Polyester auto-réticulant comprenant les unités répétées A de formule (I) : 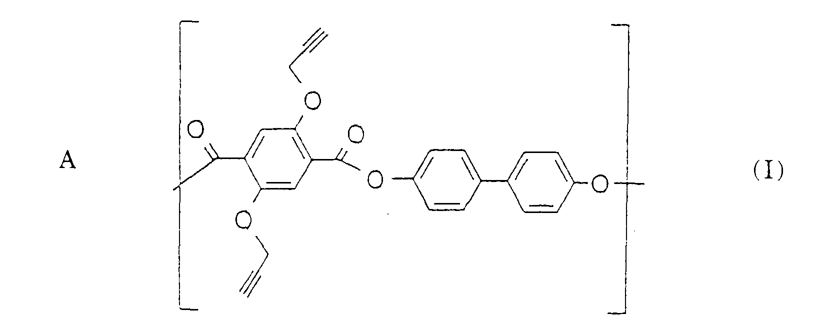 ou des unités répétées A de formule (I) et B de formule (II) disposées selon une quelconque séquence désirée : 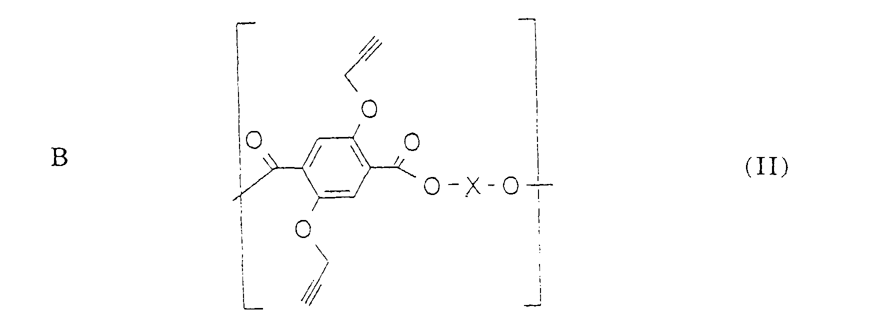 ou des unités répétées A de formule (I) éventuellement avec des unités répétées B de formule (II) et C de formule (III) disposées selon une quelconque séquence désirée : 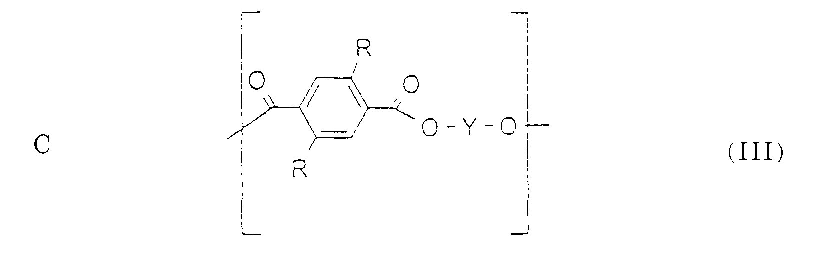 dans lesquelles R représente un atome d'hydrogène ou un groupe alkyloxy linéaire ou ramifié ayant 1 à 18 atomes de carbone et X et Y sont chacun un résidu hydrocarboné divalent différent, alicyclique ou aromatique, qui peut éventuellement contenir un hétéroatome, et le rapport molaire de A : (B + C) = 99:1 à 1:99, le nombre total moyen des unités répétées A+B+C dans la molécule de polymère est compris dans la gamme de 10 à 200, l'une des deux unités répétées terminales porte un atome d'hydrogène sur le groupe oxy et l'autre des deux unités répétées terminales porte un groupe hydroxy sur le groupe carbonyle.

2. Polyester auto-réticulant suivant la revendication 1, caractérisé en ce que X ou Y représente un groupe éventuellement substitué suivant : 1,1'-biphénydiyle, 2,5-biphényldiyle, 1,5-naphtalènediyle, 2,3-naphtalènediyle, 2,5-naphtalènediyle, 2,6-naphtalènediyle, 2,7-naphtalènediyle, 1,4-cyclohexanediyle, 2,2'-bis-(4-phényldiyl)-propane, bis-(4-phényldiyl)-méthane, oxyde de bis-(4-phényldiyl), sulfure de bis-(4-phényldiyl), bis-(4-phényldiyl)-sulfone, 4,4'-stilbènediyle, azobenzènediyle, terphényldiyle et quaterphényldiyle.

3. Polyester auto-réticulant suivant l'une des revendications 1 ou 2, caractérisé en ce qu'il a un poids moléculaire moyen en poids de 5000 à 100 000 g/mole.

4. Polyester auto-réticulant suivant l'une des revendications 1 à 3, caractérisé en ce que sa phase cristalline liquide a été alignée dans une seule direction avant réticulation par des champs magnétique, électrique, par un traitement de surface et par une action mécanique.

5. Procédé pour la production de polyester suivant l'une des revendications 1 à 4, caractérisé en ce que du dichlorure d'acide 2,5-bis-(propargyloxy)-téréphtalique de formule (V) : 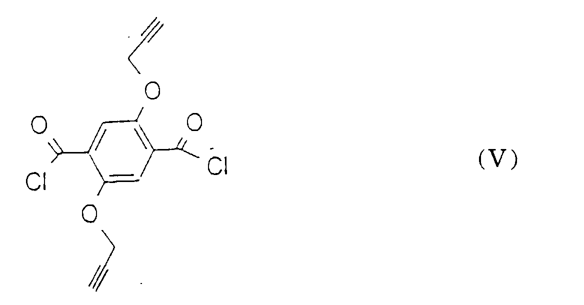 et éventuellement du dichlorure d'acide 2,5-dialkyloxytéréphtalique de formule (VI) : 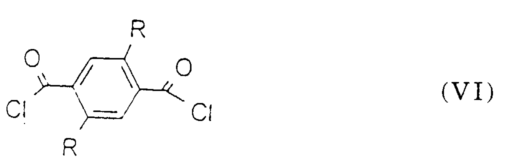 dans laquelle R est tel que défini dans la revendication 1, ou du dichlorure d'acide téréphtalique de formule : 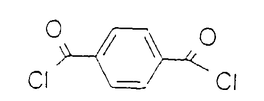 sont soumis à une polycondensation avec un ou plusieurs diols de formules :
HO-X-OH et HO-Y-OH
dans lesquelles X et Y sont tels que définis dans la revendication 1, avec chauffage dans un mélange de pyridine et d'un hydrocarbure chloré et le polyester résultant est ensuite isolé et purifié par des procédures classiques.

6. Procédé suivant la revendication 5, caractérisé en ce que la polycondensation est réalisée à des températures de 60°C à 150°C et pendant une période d'au moins 20 heures.

7. Mélange contenant le polyester auto-réticulant suivant l'une des revendications 1 à 3 et un autre polyester qui n'est pas cristallin liquide.

8. Mélange suivant la revendication 7, caractérisé en ce que sa phase cristalline liquide a été alignée dans une seule direction avant réticulation par des champs magnétique, électrique, par un traitement de surface et par une action mécanique.

9. Utilisation du polyester auto-réticulant suivant l'une des revendications 1 à 4 et du mélange suivant les revendications 7 et 8 pour des matériaux dotés de propriétés de renforcement, en particulier, en tant qu'agent de compatibilité, et pour des mélanges de polymères et pour la production de moulages et de films thermodurcissables.
